# EUROPÄISCHE PATENTANMELDUNG

(11) **EP 0 712 716 A1**
(43) Veröffentlichungstag der Anmeldung: **22.05.1996**
(21) Anmeldenummer: 95117230.3
(22) Anmeldetag: 02.11.1995
(51) Int. Cl.: B29C 70/52, B29B 15/12

(54) **Verfahren und Vorrichtung zur Extrusionsimprägnierung**

(30) Priorität: 15.11.1994 AT 2101/94
(71) Anmelder: PCD-Polymere Gesellschaft m.b.H., A-2323 Schwechat-Mannswörth (AT)
(72) Erfinder: Hauer, Andreas, Ing., A-4203 Altenberg (DE); Panzer, Ulf, Dr., A-4320 Perq (DE)
(74) Vertreter: Kunz, Ekkehard, Dr.

(57) **Zusammenfassung**

Verfahren und Vorrichtung zur kontinuierlichen Herstellung von unidirektional mit Endlosfasern verstärkten Polymeren durch Extrusionsimprägnierung, bei dem die Fasern (5) eine Imprägnierzone mit speziell ausgestalteter, einer gedämpften Schwingung entsprechenden Kanalgeometrie (4) durchlaufen.

## Beschreibung

Die Erfindung betrifft ein Extrusionsimprägnierverfahren und eine Extrusionsimprägniervorrichtung zur kontinuierlichen Herstellung von unidirektional mit Endlosfasern verstärkten Thermoplasten oder Duromeren mittels Pultrusion.

Ein Pultrusionsverfahren, bei dem Endlos-Fasern in einer Extrusionsimprägniervorrichtung mit Thermoplastschmelze imprägniert werden, ist beispielsweise aus der US 4,883,625 bekannt. Bei diesem Verfahren wird ein Faserbündel in einer Imprägnierdüse, deren Kanalgeometrie im Längsschnitt einer Sinuskurve entspricht, mit Thermoplastschmelze imprägniert. Die Schmelzezuführung in den Imprägnierkanal erfolgt nach dem Fasereinlauf über zwei Schmelzeleitungen im noch geradlinigen Bereich des Düsenspaltes. Aufgrund der Sinus-Geometrie des Düsenspaltes im anschließenden Düsenbereich wird durch die Faserumlenkungen zwar eine etwas verbesserte Imprägnierung erreicht, die Fasern werden jedoch vor allem an den Umlenkungen mechanisch stark beansprucht, wodurch es sowohl zu einer Abnahme der Faserfestigkeiten als auch zu erhöhtem Faserabrieb kommt. Außerdem ist die Imprägnierqualität bei der Verwendung der bekannten Imprägniervorrichtung in vielen Fällen nicht ausreichend. Es bestand demnach das Problem, ein Imprägnierverfahren zu finden, bei dem die angeführten Nachteile nicht auftreten. Die Aufgabe konnte durch eine spezielle Art der Faserführung bei der Imprägnierung mit Hilfe einer speziell ausgeführten Imprägnierdüse bzw. durch die spezielle Art der Schmelzezuführung gelöst werden.

Gegenstand der Erfindung ist demnach ein Verfahren zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, das dadurch gekennzeichnet ist, daß die Fasern oder Rovings eine Imprägnierzone in Form einer gedämpften Schwingung durchlaufen.

Die Krümmungen der Faserumlenkungen weisen dabei keine konstanten Radien auf, sondern sie ändern permanent ihren Radius, ähnlich einer Hertz'schen Kurve. Dies bewirkt beim Hindurchziehen des Faserstranges durch den Imprägnierkanal eine stetige Änderung der Krümmung der Faserstränge. Dadurch kommt es zwischen den einzelnen Filamenten der Fasern bzw. der Faserrovings zu Relativbewegungen, die in weiterer Folge Scherkräfte zwischen den einzelnen Filamenten hervorrufen, somit zu einer zusätzlichen Reduzierung der Polymerviskosität führen und ein besseres Einkneten der Polymermatrix in die Faserbündel bewirken. Aufgrund dieser besonderen Art der Faserführung wird eine bessere und gleichmäßigere Imprägnierung der Fasern, sowie eine geringere Beanspruchung der Fasern beim Durchgang durch die Imprägniervorrichtung erreicht.
In einer bevorzugten Ausführungsform durchlaufen die Fasern oder Rovings die Imprägnierzone in Form einer zuerst angeregten und danach gedämpften Schwingung. Dabei werden die Fasern, beginnend vom Werkzeugeintritt immer stärker aus der geradlinigen Bahn ausgelenkt und somit aufgespreizt und laufen im weiteren Verlauf des Imprägnierkanals wieder zu einer geradlinigen Bahn aus.So werden die Fasern besonders schonend umgelenkt, an den Krümmungen aufgespleißt und von Polymerschmelze durchtränkt.

Ein weiterer Gegenstand der Erfindung ist ein Verfahren zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, das dadurch gekennzeichnet ist, daß die Fasern oder Rovings beim Durchlauf durch eine kurvenförmige Imprägnierzone von oben und unten derart mit Imprägnierharz versetzt werden, daß die Harzzuführung jeweils vor einer bezüglich des zugeführten Harzstromes konkaven Krümmung im Faserdurchlauf durch die Imprägnierzone erfolgt.

Dadurch wird der Harzstrom besonders faserschonend, effektiv und gleichmäßig eingebracht, wobei die Harzmatrix ähnlich einem Gleitfilm von den Fasern bzw. Rovings mitgenommen und an der unmittelbar nachfolgenden Krümmung zwischen die einzelnen Filamente gedrückt wird.

Die Zuführung des Imprägnierharzes in den Imprägnierkanal erfolgt bevorzugt über die gesamte Breite des Imprägnierkanals, beispielsweise über Löcher, Schlitze oder eine Breitschlitzdüse. Es ist besonders bevorzugt, wenn das Imprägnierharz aus einer sich über die gesamte Werkzeugbreite erstreckenden Breitschlitzdüse austritt. Vorteilhafterweise kann dabei die Schmelzeverteilung mittels Stauleisten reguliert weden.

Ein weiterer Gegenstand der Erfindung ist eine Extrusionsimprägniervorrichtung zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, dadurch gekennzeichnet, daß die Kanlageometrie des Imprägnierkanals in Pultrusionsrichtung der Kurve einer gedämpften Schwingung oder der Kurve einer zuerst angeregten und danach gedämpften Schwingung entspricht.

Ein weiterer Gegenstand der Erfindung ist eine Extrusionsimprägniervorrichtung zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, dadurch gekennzeichnet, daß die Höhe des Imprängierkanals während des Betriebes verstellt werden kann.

Die Kanalhöhe wird durch das Öffnen und Schließen des Werkzeugober- und - unterteiles eingestellt und bestimmt so den Kanalquerschnitt und damit sowohl das Schmelzevolumen im Imprägnierkanal als auch die Stärke der Faserauslenkung aus der geradlinigen Bahn. Als besonders günstig erweist es sich dabei, wenn die Höhe des Imprägnierkanals in Längsrichtung vom Fasereinlauf hin zum Faserauslauf kontinuierlich entweder konisch vergrößert oder verkleinert werden kann.

Aufgrund der Möglichkeit, die Kanalhöhe exakt den jeweiligen Produkt- oder Verfahrensparametern bzw. Einsatzstoffen, wie z. B. Imprägniergeschwindigkeit, Art und Menge der Imprägnierharze, Art der Fasern bzw. Faserquerschnitt anzupassen, wird ebenfalls eine besonders effektive Imprägnierung und Faserschonung erreicht. Außerdem ist es leicht möglich, eventuellen geringen Faserabrieb durch Verändern der Imprägnierkanalhöhe aus der Imprägniervorrichtung auszuschleusen.

Ein Weiterer Gegenstand der Erfindung ist eine Extrusionsimprägniervorrichtung zur Imprägnierung von Endlos-Fasern oder von Endlos-Faserbündeln (Rovings) in einem kurvenförmigen Imprägnierkanal mittels geschmolzenem Thermoplast oder mittels flüssigem Reaktionsharz zur Herstellung von faserverstärktem Material, dadurch gekennzeichnet, daß zwei voneinander unabhängige Zuführungen für das Imprägnierharz an der Kanalober- und Kanalunterseite räumlich so zueinander versetzt angeordnet sind, daß die Zuführung jeweils vor einer bezüglich des zugeführten Harzstromes konkaven Krümmung des Imprängierkanals der betreffenden Gehäusehälte erfolgt.

Die Zuführung des Imprägnierharzes in die Extrusionsimprägniervorrichtung erfolgt bevorzugt aus einer sich über die gesamte Werkzeugbreite erstreckenden Breitschlitzdüse. Es ist jedoch besonders bevorzugt, wenn die Breitschlitzdüse in ihrer Breite schmäler als der Imprägnierkanal ist. Auf diese Weise ergibt sich der zusätzliche Vorteil, daß die Breitschlitzdüse an beiden Enden von Fasern überdeckt wird und ein Polymeraustritt an den Rändern verhindert wird. Um ein Rückströmen des Imprägnierharzes aus der Imprägniervorrichtung besonders effektiv zu verhindern, erweist es sich als besonders vorteilhaft, daß die Rovings im Bereich der Schmelzezuführung durch seitliche Begrenzungen am seitlichen Auswandern gehindert werden. Als seitliche Begrenzungen für die Rovings kommen beispielsweise zylinderförmige Stifte oder Leitbleche in Frage.

Bei jeder der oben angeführten erfindungsgemäßen Verfahrensvarianten bzw. Ausgestaltungen der Imprägniervorrichtungen wird eine im Vergleich zu bekannten Imprägnierverfahren bzw. -vorrichtungen verbesserte Imprägnierqualität sowie eine erhöhte Faserschonung erreicht. Zur Erreichung von optimalen Verbesserungseffekten bei den erfindungsgemäßen Imprägnierverfahren werden jedoch bevorzugt solche Imprägniervorrichtungen verwendet, bei denen zwei oder mehrere der erfindungsgemäßen Ausgestaltungen kombiniert sind.

So ist beispielsweise eine Imprägniervorrichtung bevorzugt, deren Imprägnierkanal während des Betriebes höhenverstellbar ist und dessen Kanalgeometrie der Kurve einer gedämpften Schwingung, bzw einer zuerst angeregten und danach gedämpften Schwingung entspricht. Besonders bevorzugt ist eine Imprägniervorrichtung, bei der außerdem zwei voneinander unabhängige Zuführungen für das Imprägnierharz an der Kanalober- und Kanalunterseite räumlich so zueinander versetzt angeordnet sind, daß die Zuführung jeweils vor einer bezüglich des zugeführten Harzstromes konkaven Krümmung der betreffenden Gehäusehälfte erfolgt.

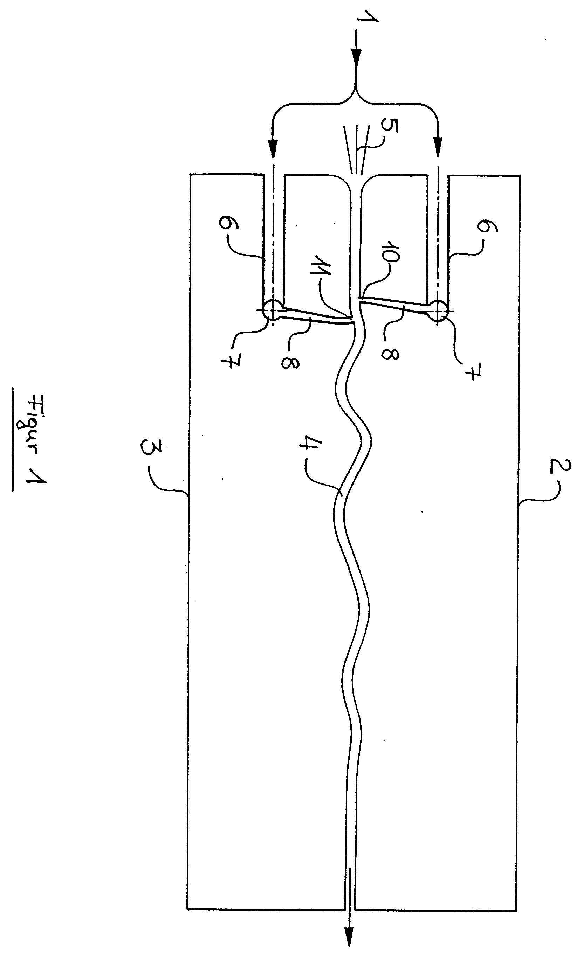

Eine bevorzugte Ausführungsform der erfindungsgemäßen Extrusionsimprägniervorrichtung ist im Längsschnitt in Figur 1 dargestellt. Darin bedeuten (1) die Zuführung des Imprägnierharzes und- (5) die Zuführung der Rovings. Weiters bedeuten (2) den Werkzeugoberteil und (3) den Werkzeugunterteil, die, fixiert auf zwei Heizplatten, den Imprägnierkanal (4) bilden. Diese Werkzeugteile verfügen über je einen Extruderanschluß mit einer Harzzuleitung (6). Die Harzzuleitungen (6) münden jeweils in einen mittig angespeisten, über die Werkzeugbreite verlaufenden Kleiderbügelverteilerkanal (7) mit dazugehöriger Verteilerinsel (8), deren Aufgabe es ist, das Polymerharz über die Breite des Imprägnierkanals (4) gleichmäßig zu verteilen und den Angüssen (10 und 11) zuzuführen.

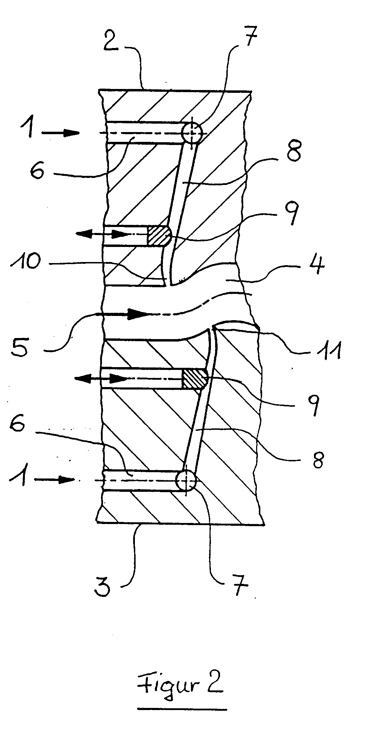

Um die Harzverteilung über die Werkzeugbreite optimal regulieren zu können, können zusätzlich von außen bei Betrieb einstellbare Stauleisten (9) am Ende der Verteilerinsel (8) angeordnet werden. Fig. 2 stellt einen Querschnitt durch das Imprägnierwerkzeug im Bereich der Schmelzezuführung dar und zeigt die Kleiderbügelverteiler (7), die Verteilerinseln (8), die von außen bei Betrieb verstellbaren Stauleisten (9) und die Angüsse (10) und (11). Die Angüsse des Imprägnierkanals (10 und 11), die von Werkzeugober (2) und -unterseite (3) in Faserrichtung räumlich versetzt angeordnet sind, führen die Polymermatrix drucklos an die Faserrovings (5) heran.

Nach Einlegen der Faserrovings (5) in das geöffnete Werkzeug wird dieses geschlossen, so daß sich der Imprägnierkanal (4) ausbildet, in dem die Imprägnierung der Faserrovings stattfindet.

Die in Fig. 1 im Längsschnitt gezeigte Kanalgeometrie weist eine aufbauende und wieder abnehmende Schwingung auf. Dies ist vergleichbar mit dem Wellenmuster einer angeregten und gedämpften Schwingung, so daß die Fasern (5) in Pultrusionsrichtung zunächst, beginnend beim ersten Anguß (10), immer stärker aus der geradlinigen Bahn ausgelenkt und somit aufgespreizt werden um danach bis zum Kanalende hin wieder zu einer geradlinigen Bahn auszulaufen. So werden die Fasern sehr schonend umgelenkt, aufgespleißt und von Polymerschmelze durchtränkt.

Beim erfindungsgemäßen Verfahren zur Imprägnierung von Endlosfasern oder von Endlosfaserbündeln (Rovings) werden demnach Endlosfasern oder Endlosfaserbündel in einer Extrusionsimprägniervorrichtung, deren Kanalgeometrie der Kurve einer gedämpften Schwingung oder einer zuerst angeregten und danach gedämpften Schwingung entspricht oder in einer Extrusionsimprägniervorrichtung mit während des Betriebes verstellbarer, bevorzugt kontinuierlich verstellbaren Höhe des Imprägnierkanals oder in einer Extrusionsimprägniervorrichtung, bei der zwei voneinander unabhängige Zuführungen für das Imprägnierharz an der Kanalober- und Kanalunterseite räumlich so zueinander versetzt angeordnet sind, daß die Zuführung jeweils vor einer bezüglich des zugeführten Harzstromes konkaven Krümmung der betreffenden Gehäusehälfte erfolgt oder in einer Extrusionsimprägniervorrichtung, bei der die genannten Ausgestaltungen in irgendeiner Art kombiniert sind, mit geschmolzenem Thermoplast oder mit flüssigem Reaktionsharz imprägniert. Durch gezielte Temperaturführung in der Extrusionsimprägniervorrichtung bzw. im Anschluß daran werden die Reaktionsharze in bekannter Weise durch teilweises oder vollständiges Ausreagieren, bzw. die Thermoplaste durch Abkühlung verfestigt.

Als Thermoplaste können alle extrudierbaren thermoplastischen Polymere oder Copolymere verwendet werden, beispielsweise Polyolefine wie z. B. Polyethylen oder Polypropylene, vinylaromatische Polymere wie z. B. Polystyrol oder Acrylnitril-Butadien-Styrol-Copolymere, Polyvinylchlorid, Polyamide, Polyester, Polysulfone, Polyethersulfone, Polyetherketone, Polyetheretherketone, Polyetheramide, Polyetherimide, Polycarbonate, Polyphenylenoxid, Polyphenylensulfid, Polyphenylenether oder deren Gemische, wie sie beispielsweise in US 4,883,625 beschrieben sind.

Als Reaktionsharze sind alle Harze bzw. deren Vorprodukte möglich, die entweder beim Durchgang durch die Extrusionsimprägniervorrichtung oder in nachfolgenden Verfahrensschritten teilweise oder vollständig aushärten und sich dabei verfestigen. Derartige Reaktionsharze sind z. B. Epoxide, Polyesterharze, Polyurethane, Melaminharze, Phenolharze.

Als Verstärkungsfasern oder Rovings kommen sowohl anorganische als auch organische Fasern in Frage, beispielsweise Glasfasern, Kohlefasern, Metallfasern, Keramikfasern, Zellulosefasern und Aramidfasern.

Die erfindungsgemäß hergestellten Extrudate können beispielsweise in Form von Bändern, Profilen oder anderen gewünschten Formen produziert werden, oder sie werden im Anschluß an die Extrusion granuliert und zur Herstellung von Fertigteilen, beispielsweise durch Spritzguß, Heißpressen, Extrusion, Tiefziehen, Wickeln oder andere Verarbeitungsverfahren eingesetzt.

### Beispiel:

Auf einer Extrusionsimprägniervorrichtung, wie sie schematisch in Figur 1 gezeigt wird, wurde bei einer Pultrusionsgeschwindigkeit von 4 m/min ein faserverstärktes Polypropylenband mit einer Breite von 318 mm, einem Fasergehalt von 38,6 M% bzw. 18,2 V% und einem Flächengewicht von 545 g/m² hergestellt. Als Faserverstärkung wurden E-Glasfaserrovings (Vetrotex, EC 17, Ro 99-1200 tex) und als Harz Polypropylen Daplen (PCD Polymere, MFI (230/2,16) 50 g/10 min) zugeführt.

Das erhaltene glasfaserverstärkte Polypropylenband wies eine sehr gute und gleichmäßige Imprägnierqualität und Polymerverteilung über den Querschnitt auf.

Zur Ermittlung der mechanischen Kennwerte wurde dieses glasfaserverstärkte Polypropylenband schichtweise mit unidirektionaler Faserorientierung so verpreßt, daß Platten entstanden, aus denen die Normprüfkörper herausgesägt wurden. An diesen Prüfkörpern wurden in Anlehnung an EN 61 Zugversuche, in Anlehnung an EN 63 Biegeversuche und in Anlehnung an ISO 179 Schlagzähigkeitsbestimmungen durchgeführt. Die Proben wiesen einen Zug-E-Modul von 16400 ± 400 MPa, eine Zugfestigkeit von 300 ± 10 MPa (gemessen bei 1,6 ± 0,4 % Dehnung), einen Biege-E-Modul von 15800 ± 250 MPa, eine Biegefestigkeit von 260 ± 20 MPa (gemessen bei einer Randfaserdehnung von 2,9 ± 0,5 %) und eine Schlagzähigkeit von 271 kJ/m² bei + 23 °C und 283 kJ/m² bei -20 °C auf.

Bei der Imprägnierung konnten sowohl im Imprägnierkanal als auch im imprägnierten Band kein Faserabrieb oder sonstige Verunreinigungen festgestellt werden.

## Patentansprüche

1. Verfahren zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, dadurch gekennzeichnet, daß die Fasern oder Rovings eine Imprägnierzone in Form einer gedämpften Schwingung durchlaufen.

2. Verfahren gemäß Anspruch 1, dadurch gekennzeichnet, daß die Fasern oder Rovings die Imprägnierzone in Form einer zuerst angeregten und danach gedämpften Schwingung durchlaufen.

3. Verfahren zur Imprägnierung vorn Endlos-Fasern oder von Endlos-Faserbündeln (Rovings) mittels geschmolzenem Thermoplast oder mittels flüssigem Reaktionsharz zur Herstellung von faserverstärktem Material, dadurch gekennzeichnet, daß die Fasern oder Rovings beim Durchlauf durch eine kurvenförmige Imprägnierzone von oben und unten derart mit Imprägnierharz versetzt werden, daß die Harzzuführung jeweils vor einer bezüglich des zugeführten Harzstromes konkaven Krümmung im Faserdurchlauf durch die Imprägnierzone erfolgt.

4. Verfahren gemäß Anspruch 1 oder 2, dadurch gekennzeichnet, daß die Fasern oder Rovings beim Durchlauf durch eine kurvenförmige Imprägnierzone von oben und unten derart mit Imprägnierharz versetzt werden, daß die Harzzuführung jeweils vor einer bezüglich des zugeführten Harzstromes konkaven Krümmung im Faserdurchlauf durch die Imprägnierzone erfolgt.

5. Extrusionsimprägniervorrichtung zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, dadurch gekennzeichnet, daß die Kanalgeometrie des Imprägnierkanals in Pultrusionsrichtung der Kurve einer gedämpften Schwingung oder der Kurve einer zuerst angeregten und danach gedämpften Schwingung entspricht.

6. Extrusionsimprägniervorrichtung zur Imprägnierung von Endlos-Fasern oder von Endlos-Faserbündeln (Rovings) mittels geschmolzenem Thermoplast oder mittels flüssigem Reaktionsharz zur Herstellung von faserverstärktem Material, dadurch gekennzeichnet, daß die Höhe des Imprängierkanals während des Betriebes verstellt werden kann.

7. Extrusionsimprägniervorrichtung gemäß Anspruch 6, dadurch gekennzeichnet, daß die Höhe des Imprägnierkanals in Längsrichtung vom Fasereinlauf hin zum Faserauslauf kontinuierlich entweder konisch vergrößert oder verkleinert werden kann.

8. Extrusionsimprägniervorrichtung zur Imprägnierung von Endlos-Fasern oder von Endlos-Faserbündeln (Rovings) in einem kurvenförmigen Imprägnierkanal mittels geschmolzenem Thermoplast oder mittels flüssigem Reaktionsharz zur Herstellung von faserverstärktem Material, dadurch gekennzeichnet, daß zwei voneinander unabhängige Zuführungen für das Imprägnierharz an der Kanalober- und Kanalunterseite räumlich so zueinander versetzt angeordnet sind, daß die Zuführung jeweils vor einer bezüglich des zugeführten Harzstromes konkaven Krümmung des Imprängierkanals der betreffenden Gehäusehälfte erfolgt.

9. Extrusionsimprägniervorrichtung gemäß einem der Ansprüche 5 bis 7, dadurch gekennzeichnet, daß zwei voneinander unabhängige Zuführungen für das Imprägnierharz an der Kanalober- und Kanalunterseite räumlich so zueinander versetzt angeordnet sind, daß die Zuführung jeweils vor einer bezüglich des zugeführten Harzstromes konkaven Krümmung des Imprägnierkanals der betreffenden Gehäusehälfte erfolgt.

10. Extrusionsimprägniervorrichtung gemäß einem der Ansprüche 5 bis 9, dadurch gekennzeichnet, daß das Imprägnierharz aus einer sich über die gesamte Werkzeugbreite erstreckenden Breitschlitzdüse austritt.

11. Extrusionsimprägniervorrichtung gemäß Anspruch 10, dadurch gekennzeichnet, daß die Breitschlitzdüse in ihrer Breite schmäler als der Imprägnierkanal ist.

12. Extrusionsimprägniervorrichtung gemäß Anspruch 11, dadurch gekennzeichnet, daß die Endlosfasern oder Rovings durch seitliche Begrenzungen am seitlichen Auswandern gehindert werden.
